# FASCICULE DE BREVET EUROPEEN

(11) **EP 1 274 635 B1**
(45) Date de publication et mention de la délivrance du brevet: **21.12.2005**
(21) Numéro de dépôt: 01921500.3
(22) Date de dépôt: 05.04.2001
(51) Int. Cl.: B65G 47/51, B65G 21/14, B65G 47/94

(54) **DISPOSITIF ACCUMULATEUR EN U DU TYPE A BANDES SANS FIN**
U-FÖRMIGE SPEICHERVORRICHTUNG IN FORM ENDLOSER BÄNDER
U-SHAPED ACCUMULATOR DEVICE WITH ENDLESS BELTS

(30) Priorité: 07.04.2000 FR 0004595
(43) Date de publication de la demande: 15.01.2003
(73) Titulaire: Sogem FL, 44560 Paimboeuf (FR)
(72) Inventeur: ABERT, Bernard, F-44400 Rèze (FR); CARABIN, Philippe, F-44230 Saint Sébastien sur Loire (FR)
(74) Mandataire: Michelet, Alain
(86) Numéro de dépôt international: PCT/FR2001/001042
(87) Numéro de publication internationale: WO 2001/076989

(56) Documents cités:
- FR-A- 2 766 803

## Description

La présente invention concerne une installation du type « accumulateur », permettant la régularisation en continu du transfert de produits entre un appareil amont et un appareil aval (voir p. ex. le document FR-A-2 766 803).

Dans le cadre de la fabrication de biscuits, tablettes de chocolats, pièces mécaniques ou autres ... les différentes unités de la chaîne de fabrication sont généralement raccordées par des systèmes de transfert, bien souvent des convoyeurs à bandes sans fin. Dans certains cas, et notamment lorsque l'appareil récepteur aval nécessite une alimentation régulière, des dispositifs de transfert particuliers sont utilisés, aptes à absorber les à-coups de débit de la ou des machines amont, et aptes à stocker au moins temporairement les produits lorsque l'appareil aval ne fonctionne pas correctement.

Le document FR-A-2 524 436 décrit un dispositif régulateur de transfert de ce genre, constitué de deux convoyeurs linéaires à bandes sans fin disposés parallèlement l'un à l'autre et mis en communication par un système de raccordement en forme de plateau circulaire ou de convoyeur demi-circulaire, porté par un chariot mobile en translation parallèlement auxdits convoyeurs linéaires. Le mouvement en translation du plateau circulaire ou du convoyeur demi-circulaire au-dessus des convoyeurs linéaires est géré pour augmenter ou diminuer la longueur du plan de transport des produits, en fonction des besoins de stockage ou des possibilités de vidange.

Comme le plan de transport du système de raccordement (plateau circulaire ou convoyeur demi-circulaire) est situé au-dessus des plans de transports des convoyeurs linéaires, le transfert des produits au niveau des extrémités amont et aval de ce système de raccordement s'effectue par l'intermédiaire de rampes inclinées. Cependant, ces rampes constituent une source de perturbation dans le transport des produits ; elles peuvent entraîner des détériorations, en particulier dans le cadre du traitement de produits fragiles.

La présente invention propose une nouvelle structure d'installation d'accumulation permettant de remédier à cet inconvénient.

Le dispositif accumulateur conforme à la présente invention est du genre constitué d'un premier convoyeur linéaire à extrémités fixes; du type à bande sans fin, adapté pour recevoir les produits provenant d'un appareil amont, et d'un second convoyeur linéaire, également à extrémités fixes du type à bande sans fin, disposé parallèlement au premier convoyeur, adapté pour délivrer les produits vers un appareil aval ; ces premier et second convoyeurs sont mis en communication par un convoyeur à bande sans fin de trajectoire demi-circulaire qui est aménagé au-dessus d'eux et qui est porté par un chariot mobile animé d'un mouvement de translation parallèlement auxdits premier et second convoyeurs. Le plan de transport des produits, à longueur variable selon la position du convoyeur demi-circulaire, est constitué par la partie amont du brin supérieur de la bande du premier convoyeur, par le brin supérieur de la bande du convoyeur demi-circulaire et par la partie aval du brin supérieur de la bande du second convoyeur linéaire.
Conformément à la présente invention, ce dispositif accumulateur comporte ces moyens de guidage du brin supérieur de la bande du premier convoyeur, adaptés pour abaisser la partie aval dudit brin supérieur située sous le convoyeur demi-circulaire et qui ne fait pas office de plan de transport des produits, cet abaissement permettant de placer dans le même plan, le plan de transport dudit premier convoyeur et le plan de transport dudit convoyeur demi-circulaire, lesdits moyens de guidage étant mobiles simultanément au chariot de manoeuvre en translation dudit convoyeur demi-circulaire pour que l'extrémité aval du plan de transport dudit premier convoyeur suive le déplacement de l'extrémité amont dudit convoyeur demi-circulaire.

Toujours selon l'invention, les moyens de guidage du brin supérieur du premier convoyeur sont portés par le chariot mobile du convoyeur demi-circulaire.

Selon une autre caractéristique, la portion de bande sans fin qui constitue le plan de transport du premier convoyeur est associée à des moyens de soutien escamotables manoeuvrés en fonction du déplacement en translation du convoyeur demi-circulaire.

Selon une forme de réalisation préférée, ces moyens de soutien se présentent sous la forme de rouleaux escamotables, et selon une disposition préférentielle, ces rouleaux escamotables sont manoeuvrés par le chariot mobile du convoyeur demi-circulaire.

Dans une forme de réalisation particulièrement intéressante, les rouleaux soutien de bande sont montés chacun sur un support muni d'au moins un secteur denté qui coopère avec une crémaillère portée par le chariot mobile du convoyeur demi-circulaire, pour abaisser ou relever chaque rouleau en fonction du déplacement dudit chariot.

Selon une autre particularité, les moyens de manoeuvre en translation du chariot mobile du convoyeur demi-circulaire sont constitués d'une chaîne de traction dont les deux extrémités sont solidarisées audit chariot, et qui s'enroule autour de deux poulies dont l'une est motorisée. Ce chariot mobile comporte encore des moyens de guidage le long d'un rail longitudinal, lequel rail fait également office de moyen de guidage du brin supérieur de la chaîne de traction par l'intermédiaire de guides latéraux aménagés sur les maillons de ladite chaîne, ou tout au moins sur certains d'entre eux.

Selon une forme de réalisation préférée, des moyens similaires de guidage et de soutien de bande sont prévus sur le second convoyeur linéaire, de manière à ce que son plan de transport soit situé dans le même plan que le plan de transport du convoyeur demi-circulaire.

Dans d'autres formes de réalisation possibles, le brin supérieur du second convoyeur linéaire de l'installation peut être disposé sous le convoyeur demi-circutaire, un dispositif complémentaire étant alors aménagé dans le prolongement de l'extrémité aval dudit convoyeur demi-circulaire pour accompagner le transfert des produits sur le plan de transport sous-jacent du second convoyeur linéaire.

Mais l'invention sera encore illustrée, sans être aucunement limitée, par la description suivante de différents modes de réalisation possibles, donnés uniquement à titre d'exemples et représentés sur les dessins annexés dans lesquels :
- la figure 1 est une vue de dessus schématique d'une installation d'accumulation conforme à la présente invention ;
- la figure 2 est une vue schématique en coupe longitudinale selon 2-2 de l'installation d'accumulation illustrée sur la figure 1;
- la figure 3 est une vue agrandie de la partie de droite de la figure 2 ;
- la figure 4 est une section selon 4-4 de la figure 1;
- les figures 5a et 5b illustrent, de manière schématique, la manoeuvre des rouleaux de soutien des bandes sans fin des premier et second convoyeurs linéaires;
- la figure 6 correspond à la même vue en coupe que la figure 2, mais avec une position différente du convoyeur demi-circulaire;
- la figure 7 est une vue schématique en coupe selon 7-7 de la figure 1 qui montre la structure du second convoyeur linéaire;
- les figures 8 et 9 montrent des variantes de réalisation possibles du second convoyeur linéaire et du principe de transfert sur celui-ci des produits provenant du convoyeur demi-circulaire ;
- la figure 10 est une vue de côté qui montre l'une des extrémités du chariot mobile du convoyeur demi-circulaire avec ses moyens de guidage et sa chaîne de traction ;
- la figure 11 est une vue en coupe transversale montrant les moyens de guidage du chariot mobile et le système de guidage de sa chaîne de traction.

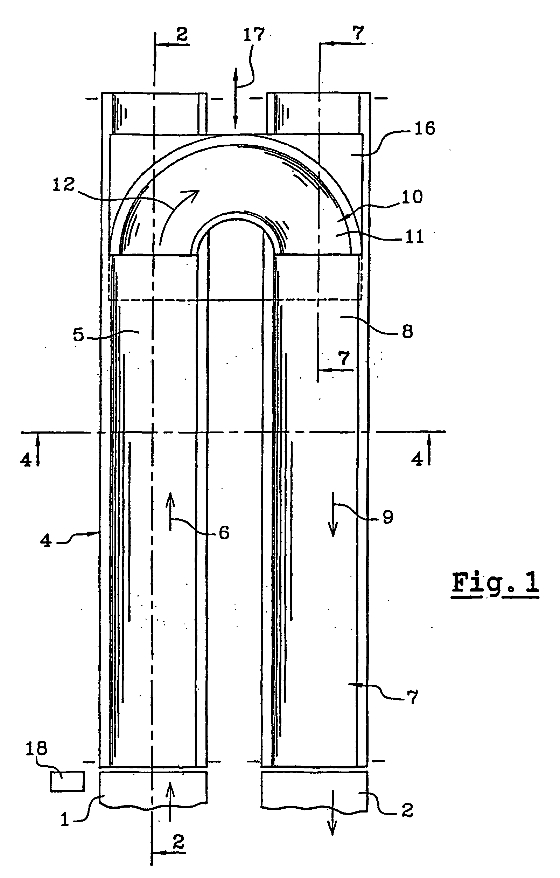

Tel que représenté sur la figure 1, le dispositif accumulateur est destiné à venir se positionner entre un appareil amont (par exemple un four de cuisson de biscuits) qui fournit les produits par l'intermédiaire d'un transporteur d'entrée 1, et un appareil aval (par exemple une installation de conditionnement) approvisionnée par un transporteur de sortie 2.

Ce dispositif accumulateur comprend :
- un premier convoyeur linéaire 4 du type à bande sans fin 5 placé dans l'alignement du transporteur d'entrée 1 et dont le brin supérieur de bande est entraîné selon le sens de la flèche d'orientation 6,
- un second convoyeur linéaire 7 du type à bande sans fin 8, disposé parallèlement au premier convoyeur 4 dans l'alignement du transporteur de sortie 2, et dont le brin supérieur de bande est entraîné selon le sens de la flèche d'orientation 9, et
- un convoyeur demi-circulaire 10, également du type à bande sans fin 11 dont le brin supérieur est entraîné selon la flèche d'orientation 12 ; ce convoyeur 10. constitue une structure de raccordement des deux convoyeurs linéaires 4 et 7.

Le convoyeur linéaire 10 est un convoyeur demi-circulaire classique ; il est placé sur les deux convoyeurs linéaires 4 et 7 de manière à ce que le brin supérieur de sa bande sans fin 11 reprenne les produits transportés par le premier convoyeur 4, pour les déverser sur le second convoyeur 7.
En outre, ce convoyeur demi-circulaire 10 est porté par un chariot 16 qui est mobile en translation selon la flèche d'orientation 17, parallèlement aux axes longitudinaux des convoyeurs linéaires 4 et 7 de manière à permettre une modification de la longueur de transport des produits sur l'installation. On comprend bien qu'en fonction du sens de déplacement du convoyeur demi-circulaire 10, on augmente ou on diminue la longueur de transport des produits entre les transporteurs d'entrée 1 et de sortie 2.

Le fonctionnement de l'installation est géré à partir des vitesses des appareils amont et aval. A partir des informations correspondantes qui déterminent les besoins d'accumulation, on pilote les vitesses des bandes sans fin 5, 8 et 11 des convoyeurs 4, 7 et 10, ainsi que le déplacement en translation du chariot mobile 16.

Eventuellement, une cellule 18 de détection des produits est placée au niveau de la zone d'entrée des produits sur l'accumulateur, c'est-à-dire la zone de transfert du transporteur d'entrée 1 sur le premier convoyeur 4. A partir des informations fournies par cette cellule 18, on peut jouer sur la vitesse de l'une au moins des bandes sans fin de l'accumulateur et/ou sur le déplacement du chariot mobile 16 pour stocker les produits ou les rangs de produits à un pas régulier.
On optimise ainsi le chargement de l'installation d'accumulation et on peut délivrer les produits à une cadence régulière vers l'appareil aval.

De manière à limiter les perturbation des produits lors de leur transport, l'installation d'accumulation conforme à la présente invention comporte des moyens qui permettent de placer dans le même plan, le plan de transport du premier convoyeur linéaire 4 et le plan de transport du convoyeur demi-circulaire 10.

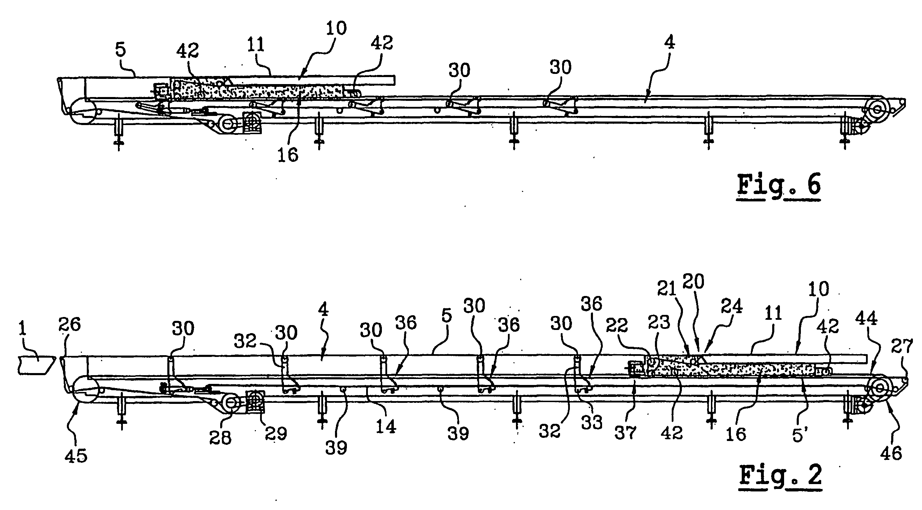

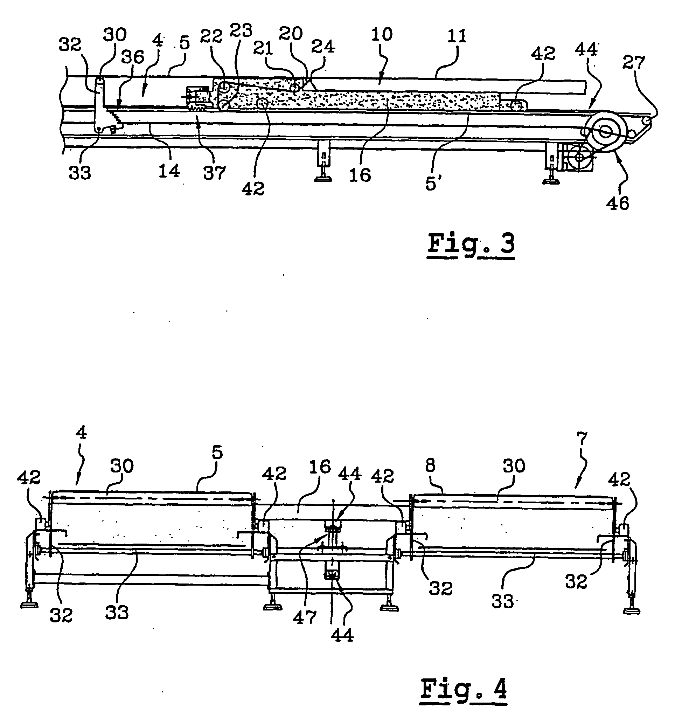

Tel qu'on peut le voir sur les figures 2 et 3, la bande sans fin 5 du convoyeur linéaire 4 est guidée par des rouleaux 20, 21, 22 et 23 solidaires du chariot mobile 16 de manière à abaisser sa partie aval 5' située sous le convoyeur demi-circulaire 10 et qui ne fait pas office de plan de transport des produits. Cette déviation du trajet de la bande sans fin 5 permet de créer un espace dans lequel vient se loger le convoyeur demi-circulaire 10 pour que le brin supérieur de sa bande sans fin 11 soit placé dans le même plan horizontal que le brin supérieur de la bande sans fin 5 du convoyeur linéaire 4.

Le premier rouleau de guidage 20 du brin supérieur de la bande sans fin 5 est placé en regard du rouleau 24 qui guide l'extrémité amont du convoyeur demi-circulaire 10 de manière à assurer une quasi continuité du plan de transport des produits. Comme les moyens de guidage 20, 21, 22 et 23 du brin supérieur de la bande sans fin 5 sont solidaires du chariot mobile 16, on comprend bien que lors des déplacements de ce chariot mobile 16, l'extrémité aval du plan de transport du convoyeur linéaire 4, définie par le rouleau mobile 20, suit l'extrémité amont du convoyeur demi-circulaire 10, définie par le rouleau mobile 24.

Sur la figure 2, on remarque que l'extrémité amont du convoyeur 4 définie par le rouleau fixe 26 est située à un niveau plus élevé que son extrémité aval définie par le rouleau fixe 27. Toujours sur cette même figure, on remarque aussi le tambour 28 qui assure l'entraînement de la bande sans fin 5 par l'intermédiaire de la motorisation 29.

Pour assurer un transport correct des produits, la partie du brin supérieur de la bande sans fin 5 située en amont du rouleau de guidage 20 est soutenue par des rouleaux fous escamotables 30, régulièrement répartis, manoeuvrés par le chariot mobile 16.

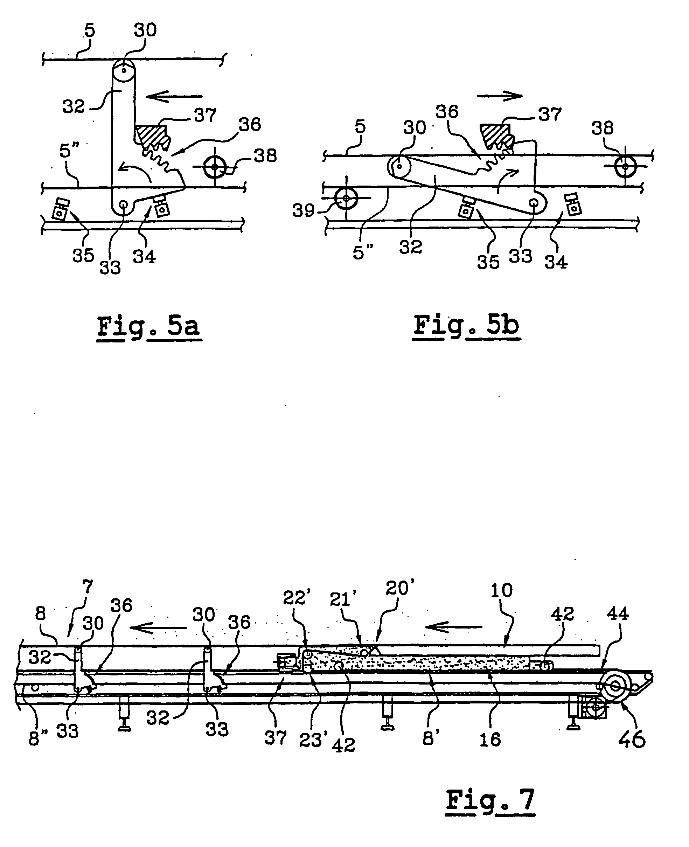

Comme cela apparaît sur les figures 2 à 5, ces rouleaux 30 sont chacun montés sur un support basculant 32 qui se présente ici sous la forme de bras latéraux articulés autour d'un axe de pivotement 33. Cet axe 33 est parallèle à l'axe des rouleaux 30.
Le débattement du support 32 est délimité par deux butées (figures 5a et 5b), l'une 34 fixant la position haute du rouleau 30 (figure 5a) et l'autre 35 fixant sa position basse (figure 5b).
L'un ou les deux bras latéraux 32 comporte(nt) un secteur denté 36 adapté pour coopérer avec une crémaillère 37 aménagée sur le chariot mobile 16 pour abaisser ou relever les rouleaux 30 en fonction du déplacement du convoyeur demi-circulaire 10. Lorsque le chariot mobile 16 se déplace en direction de l'extrémité amont du convoyeur linéaire 4 et arrive à proximité d'un rouleau de soutien de bande 30, la crémaillère 37 actionne le secteur denté 36 (figure 5a) pour faire pivoter le support 32 et abaisser le rouleau correspondant 30. Le support 32 vient en contact avec la butée 35 et dans cette position abaissée le rouleau 30 ne gêne pas le déplacement du chariot mobile 16.
En sens inverse, lorsque le chariot mobile 16 se déplace vers l'extrémité aval du convoyeur linéaire 4, la crémaillère 37 actionne le secteur denté 36 (figure 5b) pour faire pivoter le support 32 autour de l'axe 33 et relever le rouleau correspondant 30. La crémaillère 37 libère le secteur denté 36 lorsque le rouleau 30 arrive en position haute, le support 32 étant alors en appui stable sur la butée 34.

Lorsque le brin supérieur de la bande 5 est en position basse, il repose sur les rouleaux 30, sur des rouleaux complémentaires 38 régulièrement espacés et, au niveau de ses bordures latérales sur la carrosserie du convoyeur.

Comme on peut le voir sur les figures 2 et 5b, le brin inférieur 5" de la bande sans fin 5 est supporté par des rouleaux 39.

La figure 2 montre l'installation d'accumulation avec le convoyeur demi-circulaire 10 et son chariot mobile 16 positionnés au niveau de l'extrémité aval du convoyeur linéaire 4, tous les rouleaux de soutien 30 étant en position relevée. Dans cette position, le trajet des produits sur l'installation d'accumulation est maximal.

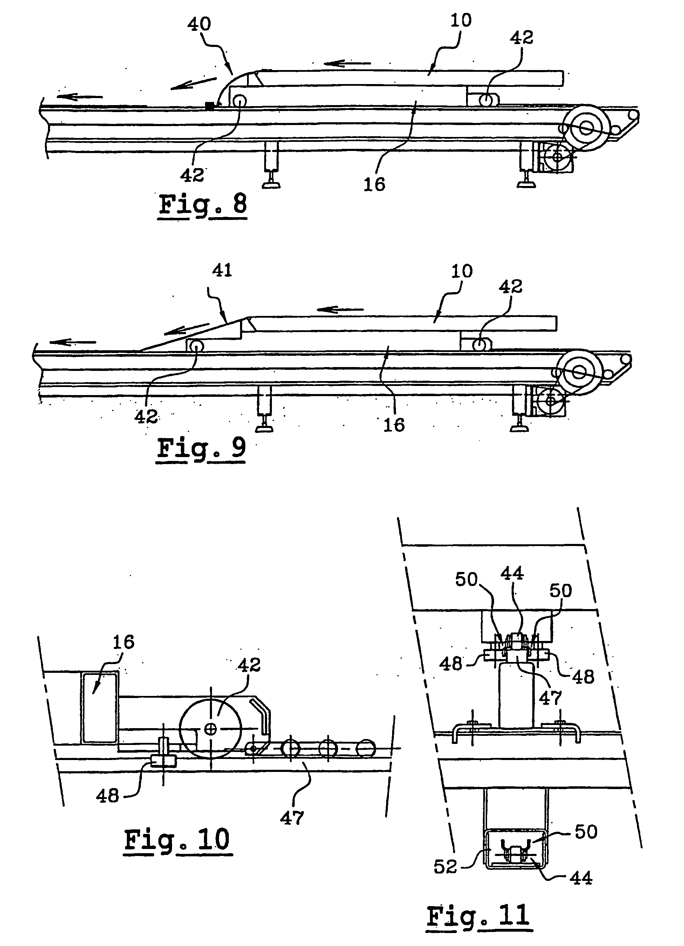

Sur la figure 6, le convoyeur demi-circulaire 10 et son chariot mobile 16 sont placés à proximité de l'extrémité amont du convoyeur linéaire 4 et tous les rouleaux de soutien 30 sont en position abaissée, le trajet des produits sur l'installation d'accumulation étant ici minimal.

Comme on peut le voir sur les figures 4 et 7, le second convoyeur linéaire 7 a une structure identique à celle du convoyeur 4 décrit ci-dessus. Ainsi, le brin supérieur de la bande sans fin 8 de ce convoyeur 7 est guidé par des rouleaux 20', 21', 22' et 23' solidaires du chariot mobile 16 (figure 7) de manière à abaisser sa partie amont 8' située sous le convoyeur demi-circulaire 10 et qui ne fait pas office de plan de transport des produits.
Comme on l'a expliqué précédemment, cet abaissement de bande permet de placer le brin supérieur de la bande sans fin 11 du convoyeur demi-circulaire 10 dans le même plan horizontal que le brin supérieur actif de la bande sans fin 8 du convoyeur linéaire 7, de manière à limiter les perturbations des produits lors de leur passage d'un convoyeur sur l'autre.
De la même manière, des rouleaux escamotables 30 sont prévus pour soutenir le brin supérieur de la bande sans fin 8 constituant le plan de transport aval des produits. Comme pour le premier convoyeur linéaire 4, le support 32 des rouleaux 30 comporte un secteur denté 36 qui permet le relevage ou l'abaissement des rouleaux par l'intermédiaire d'une crémaillère de manoeuvre 37 aménagée sur le chariot mobile 16.

Dans des variantes de réalisation, le brin supérieur de la bande sans fin du second convoyeur peut être situé à un niveau inférieur à celui du brin supérieur du convoyeur demi-circulaire 10. Dans ce cas, un dispositif complémentaire est aménagé dans le prolongement de l'extrémité aval du convoyeur demi-circulaire pour prendre en charge les produits et les accompagner sur le plan de transport sous-jacent du second convoyeur linéaire. Cette disposition permet de simplifier l'installation puisque le second convoyeur linéaire peut alors consister en un convoyeur classique à bande sans fin.
La figure 8 illustre une variante de ce type dans laquelle l'extrémité aval du convoyeur demi-circulaire est équipée d'un classeur mobile 40 permettant de placer les produits sur chant et en appui les uns contre les autres.
La figure 9 illustre une autre variante de ce type dans laquelle l'extrémité aval du convoyeur demi-circulaire est équipée d'une simple tôle de guidage 41. Cette tôle peut aussi être remplacée par un petit convoyeur incliné, du type à bande sans fin.

Dans ces différentes variantes de réalisation, comme les produits sont transférés du convoyeur demi-circulaire vers le convoyeur linéaire avec une descente de niveau, les risques de perturbations ou de détériorations sont limités.

Dans l'installation d'accumulation conforme à la présente invention, le chariot mobile 16 qui porte le convoyeur demi-circulaire 10 est monté sur des roues 42 qui reposent sur des chemins de roulement aménagés sur les deux convoyeurs linéaires parallèles 4 et 7. Ce chariot 16 est manoeuvré par une chaîne de traction 44 aménagée entre les deux convoyeurs linéaires 4 et 7. La chaîne de traction 44 s'enroule autour de deux poulies 45 et 46 dont l'une (la poulie 46) est motorisée, et ses deux extrémités sont fixées sur le chariot 16 pour permettre son entraînement dans un sens ou dans l'autre.

Comme on l'a représenté sur les figures 4, 10 et 11, le chariot mobile 16 est guide en translation sur un rail 47 par l'intermédiaire de galets latéraux 48. d'axes verticaux. Le brin supérieur de la chaîne de traction 44 glisse sur ce rail 47, maintenu par des guides latéraux 50 ; ces guides 50 peuvent équiper tous les maillons de la chaîne 44, ou seulement certains d'entre eux.

Sur la figure 11, on remarque que le brin inférieur de la chaîne 44 est logé dans une poutre creuse 52.

## Revendications

1. Dispositif accumulateur pour régulér le transfert de produits entre un appareil amont et un appareil aval, lequel dispositif est constitué d'un premier convoyeur linéaire (4) à extrémités fixes, du type bande sans fin (5), adapté pour recevoir les produits provenant de l'appareil amont, et d'un second convoyeur linéaire (7) également à extrémités fixes, du type à bande sans fin (8), disposé parallèlement au premier convoyeur (4), adapté pour délivrer les produits vers l'appareil aval; lesdits premier et second convoyeurs (4, 7) étant mis en communication par un convoyeur (10) à bande sans fin (11) de trajectoire demi-circulaire, aménagé au-dessus desdits premier et second convoyeur (4, 7) et porté par un chariot mobile (16) animé d'un mouvement de translation parallèlement auxdits premier et second convoyeurs (4, 7), le plan de transport des produits, à longueur variable selon la position du convoyeur demi-circulaire (10), étant constitué par la partie amont du brin supérieur de la bande (5) du premier convoyeur (4), par le brin supérieur de la bande (11) du convoyeur demi-circulaire (10) et par la partie aval du brin supérieur de la bande (8) du second convoyeur linéaire (7), ledit chariot mobile (16) étant équipé de moyens de guidage (20, 21, 22, 23) du brin supérieur de la bande (5) du premier convoyeur (4), adaptés pour abaisser la partie aval (5') dudit brin supérieur située sous le convoyeur demi-circulaire (10) et qui ne fait par office de plan de transport des produits, cet abaissement permettant de placer dans le même plan, le plan de transport du premier convoyeur (4) et le plan de transport du convoyeur demi-circulaire (10), et la portion de bande sans fin (5) qui constitue le plan de transport dudit premier convoyeur (4) étant associée à des moyens de soutien escamotables (30), **caractérisé en ce que** ledit chariot mobile (16) comporte des moyens -pour assurer la manoeuvre directe desdits moyens de soutien escamotables (30).

2. Dispositif accumulateur selon la revendication 1, **caractérisé en ce que** les moyens de soutien de la portion de bande sans fin (5) qui constitue le plan de transport du premier convoyeur (4) sont constitués de rouleaux escamotables (30).

3. Dispositif accumulateur selon la revendication 2, **caractérisé en ce qu'**il comporte des rouleaux (30) de soutien de bande montés chacun sur un support (32) muni d'au moins un secteur denté (36) qui coopère avec une crémaillère (37) portée par le chariot mobile (16) du convoyeur demi-circulaire (10), pour abaisser ou relever chaque rouleau (30) en fonction du déplacement dudit chariot (16).

4. Dispositif accumulateur selon l'une quelconque des revendications 1 à 3, **caractérisé en ce que** les moyens de manoeuvre en translation du chariot mobile (16) du convoyeur demi-circulaire (10) sont constitués d'une chaîne de traction (44) dont les deux extrémités sont solidaires dudit chariot (16), et qui s'enroule autour de deux poulies (45, 46) dont l'une est motorisée, ledit chariot (16) comportant des moyens de guidage le long d'un rail longitudinal (47) qui fait également office de moyen de guidage du brin supérieur de la chaîne de traction (44) par l'intermédiaire de guides latéraux (50) aménagés sur les maillons de ladite chaîne (44), ou tout au moins sur certains d'entre eux.

5. Dispositif accumulateur selon l'une quelconque des revendications 1 à 4, **caractérisé en ce qu'**il comporte des moyens de guidage (20', 21', 22', 23') du brin supérieur de la bande (8) du second convoyeur (7) adaptés pour abaisser la partie amont (8') dudit brin supérieur située sous le convoyeur demi-circulaire (10) et qui ne fait pas office de plan de transport des produits, cet abaissement, permettant de placer dans le même plan, le plan de transport dudit convoyeur demi-circulaire (10) et le plan de transport dudit second convoyeur (7), lesquels moyens de guidage (20', 21', 22' et 23') sont portés par le chariot mobile (16) du convoyeur demi-circulaire (10) pour que l'extrémité amont du plan de transport dudit second convoyeur (7) suive le déplacement de l'extrémité aval dudit convoyeur demi-circulaire (10), et **en ce que** la portion de bande sans fin (8) qui constitue le plan de transport du second convoyeur (7) est associé à des moyens de soutien escamotables (30).

6. Dispositif accumulateur selon la revendication 5, **caractérisé en ce que** la portion de bande sans fin (8) qui constitue le plan de transport du second convoyeur (7) est associée à des rouleaux de soutien escamotables (30) montés chacun sur un support (32) muni d'au moins un secteur denté (36), lequel secteur denté (36) coopère avec une crémaillère (37) portée par le chariot mobile (16) du convoyeur demi-circulaire (10) pour abaisser ou relever chaque rouleau (30) en fonction du déplacement dudit chariot (16).

7. Dispositif accumulateur selon l'une quelconque des revendications 1 à 4, **caractérisé en ce qu'**il comporte un second convoyeur linéaire dont le brin supérieur de bande est disposé sous le convoyeur demi-circulaire (10), un dispositif complémentaire (40, 41) étant aménagé dans le prolongement de l'extrémité aval dudit convoyeur demi-circulaire (10) pour accompagner le transfert des produits sur le plan de transport sous-jacent dudit second convoyeur.

8. Dispositif accumulateur selon l'une quelconque des revendications 1 à 7, **caractérisé en ce qu'**il comporte une cellule (18) de détection des produits, disposée au niveau de la zone d'entrée des produits, laquelle cellule (18) permet de gérer les vitesses de l'une au moins des bandes sans fin (5, 8, 11) et/ou le déplacement du chariot mobile (16) pour stocker les produits ou les rangs de produits à un pas régulier.

## Patentansprüche

1. Sammelvorrichtung zum Regeln des Transfers von Produkten zwischen einem stromaufwärtigen Gerät und einem stromabwärtigen Gerät, wobei die Vorrichtung aus einer ersten linearen Fördereinrichtung (4) mit festen Enden vom Endlosbandtyp (5), die zum Aufnehmen der von dem stromaufwärtigen Gerät kommenden Produkte geeignet ist, und einer zweiten linearen Fördereinrichtung (7) vom Endlosbandtyp (8) besteht, die ebenfalls feste Enden aufweist, parallel zur ersten Fördereinrichtung (4) angeordnet ist und zum Ausgeben der Produkte in Richtung des stromabwärtigen Geräts geeignet ist, wobei die erste und die zweite Fördereinrichtung (4, 7) über eine Fördereinrichtung (10) mit einem Endlosband (11) mit halbkreisförmiger Bahn verbunden sind, welche über der ersten und zweiten Fördereinrichtung (4, 7) angeordnet und von einem bewegbaren Schlitten (16) getragen ist, der in einer Translationsbewegung parallel zur ersten und zweiten Fördereinrichtung (4,7) angetrieben ist, wobei die entsprechend der Position der halbkreisförmigen Fördereinrichtung (10) in der Länge variable Produkttransportebene durch den stromaufwärtigen Teil des oberen Trums des Bandes (5) der ersten Fördereinrichtung, das obere Trum des Bandes (11) der halbkreisförmigen Fördereinrichtung (10) und durch den stromabwärtigen Teil des oberen Trums des Bandes (8) der zweiten linearen Fördereinrichtung (7) gebildet ist, wobei der bewegbare Schlitten (16) mit Führungseinrichtungen (20, 21, 22, 23) für das obere Trum des Bandes (5) der ersten Fördereinrichtung (4) versehen ist, die in der Lage sind, den stromabwärtigen Teil (5') des oberen Trums, der sich unter der halbkreisförmigen Fördereinrichtung (10) befindet; und nicht als Produkttransportebene dient, abzusenken, wobei das Absenken ermöglicht, die Transportebene der ersten Fördereinrichtung (4) und die Transportebene der halbkreisförmigen Fördereinrichtung (10) in der gleichen Ebene zu positionieren, und wobei, der Teil des Endlosbandes (5), der die Transportebene der ersten Fördereinrichtung (4) bildet, mit einziehbaren Stützeinrichtungen (30) verbunden ist, **dadurch gekennzeichnet, daß** der bewegbare Schlitten (16) Einrichtungen zum Gewährleisten der direkten Betätigung der einziehbaren Stützeinrichtungen (30) aufweist.

2. Sammelvorrichtung nach Anspruch 1, **dadurch gekennzeichnet, daß** die Einrichtungen zum Stützen des Teils des Endlosbandes (5), das die Transportebene der ersten Fördereinrichtung (4) bildet, aus einziehbaren Rollen (30) bestehen.

3. Sammelvorrichtung nach Anspruch 2, **dadurch gekennzeichnet, daß** sie Bandstützrollen (30) aufweist, die jeweils an einer Stütze (32) angebracht sind, welche mindestens einen Zahnabschnitt (36) aufweist, der mit einer Zahnstange (37), welche von dem bewegbaren Schlitten (16) der halbkreisförmigen Fördereinrichtung (10) getragen ist, zusammenwirkt, um jede Rolle (30) in Abhängigkeit von der Verschiebung des Schlittens (16) abzusenken oder anzuheben.

4. Sammelvorrichtung nach einem der Ansprüche 1 bis 3, **dadurch gekennzeichnet, daß** die Betätigungseinrichtungen zum Verschieben des bewegbaren Schlittens (16) der halbkreisförmigen Fördereinrichtung (10) aus einer Zugkette (44), deren beide Enden mit dem Schlitten (16) verbunden sind, bestehen und die um zwei Scheiben (45, 46) gewunden ist, von denen eine motorgetrieben ist, wobei der Schlitten (16) Einrichtungen zum Führen entlang einer Längsschiene (47) aufweist, welche über seitliche Führungen (50), die an den Gliedern der Kette (44) oder zumindest an einigen derselben ausgebildet sind, ebenfalls als Führungseinrichtung für das obere Trum der Zugkette (44) dient.

5. Sammelvorrichtung nach einem der Ansprüche 1 bis 4, **dadurch gekennzeichnet, daß** sie Führungseinrichtungen (20', 21', 22', 23') für das obere Trum des Bandes (8) der zweiten Fördereinrichtung (7) aufweist, welche zum Absenken des stromaufwärtigen Teils (8') des oberen Trums, der unter der halbkreisförmigen Fördereinrichtung (10) angeordnet ist und nicht als Produkttransportebene dient, geeignet sind, wobei dieses Absenken ermöglicht, die Transportebene der halbkreisförmigen Fördereinrichtung (10) und die Transportebene der zweiten Fördereinrichtung (7) in der gleichen Ebene anzuordnen, wobei die Führungseinrichtungen (20', 21', 22' und 23') von dem bewegbaren Schlitten (16) der halbkreisförmigen Fördereinrichtung (10) getragen sind, damit das stromaufwärtige Ende der Transportebene der zweiten Fördereinrichtung (7) der Verschiebung des stromabwärtigen Endes der halbkreisförmigen Fördereinrichtung (10) folgt, und daß der Teil des Endlosbandes (8), der die Transportebene der zweiten Fördereinrichtung (7) bildet, mit einziehbaren Stützeinrichtungen (30) verbunden ist.

6. Sammelvorrichtung nach Anspruch 5, **dadurch gekennzeichnet, daß** der Teil des Endlosbandes (8), der die Transportebene der zweiten Fördereinrichtung (7) bildet, mit einziehbaren Stützrollen (30) verbunden ist, die jeweils an einer Stütze (32) angebracht sind, welche mindestens einen Zahnabschnitt (36) aufweist, der mit einer Zahnstange (37), welche von dem bewegbaren Schlitten (16) der halbkreisförmigen Fördereinrichtung (10) getragen ist, zusammenwirkt, um jede Rolle (30) in Abhängigkeit von der Verschiebung des Schlittens (16) abzusenken oder anzuheben.

7. Sammelvorrichtung nach einem der Ansprüche 1 bis 4, **dadurch gekennzeichnet, daß** sie eine zweite lineare Fördereinrichtung aufweist, deren oberes Bandtrum unter der halbkreisförmigen Fördereinrichtung (10) angeordnet ist, wobei eine komplementäre Vorrichtung (40, 41) in Verlängerung des stromabwärtigen Endes der halbkreisförmigen Fördereinrichtung (10) angeordnet ist, um den Transfer der Produkte auf die darunterllegende Transportebene der zweiten Fördereinrichtung zu begleiten.

8. Sammelvorrichtung nach einem der Ansprüche 1 bis 7, **dadurch gekennzeichnet, daß** sie eine Produkterkennungszelle (18) aufweist, die in Höhe der Produkteintrittszone angeordnet ist, wobei die Zelle (18) ermöglicht, die Geschwindigkeiten zumindest eines der Endlosbänder (5, 8, 11) und/oder die Verschiebung des bewegbaren Schlittens (16) zu regeln, um die Produkte oder die Reihen von Produkten mit einem regelmäßigen Abstand zu lagern.

## Claims

1. An accumulator device to regulate the transfer of products between an upstream unit and a downstream unit, which device is composed of a first linear conveyor (4) with fixed ends, of the endless belt type (5), adapted to receive the products from the upstream unit, and of a second linear conveyor (7), also with fixed ends and of the endless belt type (8), arranged parallel to the first conveyor (4), adapted to deliver the products towards the downstream unit, whereas these first and second conveyors (4, 7) are communicating via a conveyor (10) with endless belt (11), with semicircular trajectory, provided above said first and second conveyors (4, 7) and borne by a mobile carriage (16) driven by a translation movement parallel to said first and second conveyors (4, 7), whereas the transport plane of the products, with variable length according to the position of the semicircular conveyor (10) is composed of the upstream section of the upper side of the belt (5) of the first conveyor (4), of the upper side of the belt (11) of the semicircular conveyor (10) and of the downstream section of the upper side of the belt (8) of the second linear conveyor (7), whereas the mobile carriage (16) is fitted with means for guiding (20, 21, 22, 23) the upper side of the belt (5) of the first conveyor (4), adapted to lower the downstream section (5') of said upper side situated beneath the semicircular conveyor (10) and which does not serve as a transport plane of the products, said lowering enabling to place in the same plane, the transport plane of the first conveyor (4) and the transport plane of the semicircular conveyor (10), and the section of endless belt (5) forming the transport plane of said first conveyor (4) is associated with retractable supporting means (30), **characterised in that** said mobile carriage (16) comprises means for direct manoeuvring of said retractable supporting means (30).

2. An accumulator device according to claim 1, **characterised in that** the supporting means of the endless belt (5) forming the transport plane of the first conveyor (4) are composed of retractable rolls (30).

3. An accumulator device according to claim 2, **characterised in that** it comprises supporting rolls (30) of the belt, each mounted on a bracket (32) fitted with at least one toothed sector (36) which co-operates with a rack (37) borne by the mobile carriage (16) of the semicircular conveyor (10), to lower or raise each roll (30) in relation to the displacement of said carriage (16).

4. An accumulator device according to any of the claims 1 to 3, **characterised in that** the translation manoeuvring means of the mobile carriage (16) of the semicircular conveyor (10) are composed of a traction chain (44) whereof both ends are interconnected with said carriage (16), and which winds around two pulleys (45, 46) whereof the one is motorised, whereas said mobile carriage (16) comprises means for guiding along a longitudinal rail (47) which also serves as a means for guiding the upper side of the traction chain (44) via lateral guides (50) provided on the links of said chain (44), or at least on some of them.

5. An accumulator device according to any of the claims 1 to 4, **characterised in that** it comprises means for guiding (20', 21', 22', 23') the upper side of the belt (8) of the second conveyor (7), adapted to lower the upstream section (8') of said upper side situated beneath the semicircular conveyor (10) and which does not serve as a transport plane of the products, said lowering enabling to place in the same plane, the transport plane of said semicircular conveyor (10) and the transport plane of said second conveyor (7), which guiding means (20', 21', 22' and 23') are borne by the mobile carriage (16) of the semicircular conveyor (10) so that the upstream end of the transport plane of said second conveyor (7) should follow the displacement of the downstream end of said semicircular conveyor (10) and **in that** the section of endless belt (8) forming the transport plane of the second conveyor (7) is associated with retractable supporting means (30).

6. An accumulator device according to claim 5, **characterised in that** the section of endless belt (8) forming the transport plane of the second conveyor (7) is associated with retractable supporting rolls (30) each mounted on a bracket (32) fitted with at least one toothed sector (36), which toothed sector (36) co-operates with a rack (37) borne by the mobile carriage (16) of the semicircular conveyor (10) to raise or lower each roll (30) in relation to the displacement of said carriage (16).

7. An accumulator device according to any of the claims 1 to 4, **characterised in that** it comprises a second linear conveyor whereof the upper side of the belt is arranged beneath the semicircular conveyor (10), whereas a complementary device (40, 41) is provided in the extension of the downstream end of said semicircular conveyor (10) to follow the transfer of the products on the underlining transport plane of said second linear conveyor.

8. An accumulator device according to any of the claims 1 to 7, **characterised in that** it comprises a cell (18) for detecting the products, placed at the inlet zone of the products, which cell (18) enables to control the speeds of at least one of the endless belts (5, 8, 11) and/or the displacement of the mobile carriage (16) to store the products or the rows of products with a regular pitch.
